# EUROPEAN PATENT APPLICATION

(11) **EP 4 790 523 A1**
(43) Date of publication of application: **12.08.2026**
(21) Application number: 26157033.7
(22) Date of filing: 06.02.2026
(51) Int. Cl.: G06F 3/01

(54) **ISOMETRIC INPUTS FOR EXTENDED-REALITY SYSTEMS**

(30) Priority: 07.02.2025 US 202563756007 P; 04.02.2026 US 202619530327
(71) Applicant: Meta Platforms Technologies, LLC, Menlo Park, CA 94025 (US)
(72) Inventor: TRAUTMANN, Eric, Menlo Park, 94025 (US); GUTNISKY, Diego Adrian, Menlo Park, 94025 (US); SUSSILLO, David, Menlo Park, 94025 (US)
(74) Representative: Murgitroyd & Company

(57) **Abstract**

A wearable device includes a neuromuscular sensor and a processor. The neuromuscular sensor is configured to detect a neuromuscular signal indicative of muscular contraction within a hand. The processor is configured to receive the neuromuscular signal and determine based on the neuromuscular signal that one or more fingers of the hand are performing one or more isometric contractions. The processor is also configured to determine that the one or more isometric contractions are associated with a particular input at an XR device configured to perform a particular operation in response to the particular input. Additionally, the processor is configured to, responsive to determining that the one or more isometric contractions are associated with the particular input, transmit an indication of the particular input to the XR device.

## Description

### RELATED APPLICATION

### TECHNICAL FIELD

This relates, generally, to extended reality (XR) systems and, more specifically, to inputs for the XR systems based on isometric hand contractions against a surface.

### BACKGROUND

Modern XR systems enable users to interact with virtual content for productivity, entertainment, and other purposes. These systems include augmented reality (AR) and mixed reality (MR) systems, which generally require an input mechanism (e.g., controller, in-air gesture) for interacting with the virtual content. There is a need for innovative input mechanisms to further improve the overall user experience in these XR systems.

### SUMMARY

Neuromuscular signals (e.g., electromyographic, EMG, signals) and/or other signals (e.g., from an inertial measurement unit, IMU) can be used to determine forces (e.g., static forces, dynamic forces) applied by a user's hand, for instance, against surfaces, objects, or other body parts. Once determined, these forces can be used as control signals for user input, like a cursor or menu selection. This allows for any object, surface, or body part to act like a button, joystick, scroll wheel, or mouse, which can improve the user experience by removing the need for a controller or another input mechanism that might be cumbersome, non-intuitive, or otherwise inconvenient for the user.

In accordance with a first aspect of the present disclosure, there is provided a wearable device comprising: a neuromuscular sensor configured to detect a neuromuscular signal indicative of muscular contraction within a hand; and a processor configured to: receive the neuromuscular signal from the neuromuscular sensor; determine based on the neuromuscular signal that one or more fingers of the hand are performing one or more isometric contractions; determine that the one or more isometric contractions are associated with a particular input at an XR device configured to perform a particular operation in response to the particular input; and responsive to determining that the one or more isometric contractions are associated with the particular input, transmit an indication of the particular input to the XR device.

The processor may be further configured to: determine based on the neuromuscular signal whether first, second, or third fingers of the one or more fingers are isometrically contracting, wherein the first finger is associated with a first input, the second finger is associated with a second input, and the third finger is associated with a third input; responsive to determining that (i) the first finger is isometrically contracting, transmit an indication of the first input to the XR device, (ii) the second finger is isometrically contracting, transmit an indication of the second input to the XR device, and (iii) the third finger is isometrically contracting, transmit an indication of the third input to the XR device; and wherein the XR device is further configured to perform a first operation in response to the first input, a second operation in response to the second input, and a third operation in response to the third input.

The processor may be further configured to, responsive to determining that the first finger is isometrically contracting, determine based on the neuromuscular signal a direction in which the first finger is isometrically contracting; transmitting the indication of the first input comprises transmitting an indication of the direction in which the first finger is isometrically contracting; and the XR device is further configured to perform the first operation based on the indication of the direction in which the first finger is isometrically contracting.

The processor may be further configured to, responsive to determining that the first finger is isometrically contracting, determine based on the neuromuscular signal an intensity at which the first finger is isometrically contracting; transmitting the indication of the first input comprises transmitting an indication of the intensity at which the first finger is isometrically contracting; and the XR device is further configured to perform the first operation based on the indication of the intensity at which the first finger is isometrically contracting.

The processor may be further configured to, responsive to determining that the first finger is isometrically contracting, determine based on the neuromuscular signal a direction in which the first finger is isometrically contracting; transmitting the indication of the first input comprises transmitting an indication of the direction in which the first finger is isometrically contracting; and the XR device is further configured to perform the first operation based on the indication of the direction in which the first finger is isometrically contracting; and the processor may be further configured to, responsive to determining that the first finger is isometrically contracting, determine based on the neuromuscular signal an intensity at which the first finger is isometrically contracting; transmitting the indication of the first input comprises transmitting an indication of the intensity at which the first finger is isometrically contracting; and the XR device is further configured to perform the first operation based on the indication of the intensity at which the first finger is isometrically contracting.

The processor may be further configured to transmit the indication of the particular input to the XR device prior to the particular input being received at the XR device via an input pad connected to the XR device; and the particular operation comprises performing a latency-reduction operation preparatory to receiving the particular input from the input device such that the XR device is able to more quickly respond to receiving the particular input.

In an optional example, the particular input may be an application-specific input; the processor may be further configured to determine that a particular application is active on the XR device; and determining that the one or more isometric contractions are associated with the particular input at the XR device is based on the particular application.

The wearable device of the first aspect may further comprise: a surface sensor configured to detect a surface signal indicative of a surface proximity; wherein the processor may be further configured to, prior to determining that the one or more fingers are performing one or more isometric contractions, (i) receive the surface signal from the surface sensor, (ii) determine based on the surface signal that the hand is coming into contact with a surface, and (iii) responsive to determining that the hand is coming into contact with the surface, provide a notification regarding neuromuscular inputs or instruct the XR device to provide the notification regarding neuromuscular inputs.

The processor may be further configured to (i) determine based on the neuromuscular signal whether first and second fingers are isometrically contracting and (ii) responsive to detecting that the first and second fingers are contracting, determine based on the neuromuscular signal a separation distance between the first and second fingers; and determining that the one or more isometric contractions are associated with the particular input is based on the separation distance between the first and second fingers.

The neuromuscular sensor may comprise a first EMG sensor configured to detect a first set of the one or more fingers and a second EMG sensor configured to detect a second set of the one or more fingers distinct from the first set of the one or more fingers; and the neuromuscular signal may comprise EMG data corresponding to the first and second sets of the one or more fingers.

The processor may be further configured to: after receiving the neuromuscular signal at a particular time, receive another neuromuscular signal at a subsequent time; determine based on the other neuromuscular signal that the one or more fingers of the hand are performing one or more other isometric contractions; determine that the one or more other isometric contractions are associated with another particular input at the XR device, wherein the XR device is further configured to perform another particular operation in response to the other particular input; and responsive to determining that the one or more other isometric contractions are associated with the other particular input, transmit an indication of the other particular input to the XR device.

In accordance with a second aspect of the present disclosure, there is provided a non-transitory, computer-readable medium comprising instructions which, when executed by a processor of a wearable device, cause the processor to: receive a neuromuscular signal from a neuromuscular sensor configured to detect the neuromuscular signal, wherein the neuromuscular signal is indicative of a muscular contraction within a hand; determine based on the neuromuscular signal that one or more fingers of the hand are performing one or more isometric contractions; determine that the one or more isometric contractions are associated with a particular input at an XR device configured to perform a particular operation in response to the particular input; and responsive to determining that the one or more isometric contractions are associated with the particular input, transmit an indication of the particular input to the XR device.

The instructions may further cause the processor to: determine based on the neuromuscular signal whether first, second, or third fingers of the one or more fingers are isometrically contracting, wherein the first finger is associated with a first input, the second finger is associated with a second input, and the third finger is associated with a third input; responsive to determining that (i) the first finger is isometrically contracting, transmit an indication of the first input to the XR device, (ii) the second finger is isometrically contracting, transmit an indication of the second input to the XR device, and (iii) the third finger is isometrically contracting, transmit an indication of the third input to the XR device; and wherein the XR device is further configured to perform a first operation in response to the first input, a second operation in response to the second input, and a third operation in response to the third input.

The instructions may further cause the processor to, responsive to determining that the first finger is isometrically contracting, determine based on the neuromuscular signal a direction in which the first finger is isometrically contracting; transmitting the indication of the first input comprises transmitting an indication of the direction in which the first finger is isometrically contracting; and the XR device is further configured to perform the first operation based on the indication of the direction in which the first finger is isometrically contracting.

The instructions may further cause the processor to, responsive to determining that the first finger is isometrically contracting, determine based on the neuromuscular signal an intensity at which the first finger is isometrically contracting; transmitting the indication of the first input comprises transmitting an indication of the intensity at which the first finger is isometrically contracting; and the XR device is further configured to perform the first operation based on the indication of the intensity at which the first finger is isometrically contracting.

The instructions may further cause the processor to, responsive to determining that the first finger is isometrically contracting, determine based on the neuromuscular signal a direction in which the first finger is isometrically contracting; transmitting the indication of the first input comprises transmitting an indication of the direction in which the first finger is isometrically contracting; and the XR device is further configured to perform the first operation based on the indication of the direction in which the first finger is isometrically contracting; and responsive to determining that the first finger is isometrically contracting, determine based on the neuromuscular signal an intensity at which the first finger is isometrically contracting; transmitting the indication of the first input comprises transmitting an indication of the intensity at which the first finger is isometrically contracting; and the XR device is further configured to perform the first operation based on the indication of the intensity at which the first finger is isometrically contracting.

The instructions may further cause the processor to transmit the indication of the particular input to the XR device prior to the particular input being received at the XR device via an input pad connected to the XR device; the particular operation comprises performing a latency-reduction operation preparatory to receiving the particular input from the input device such that the XR device is able to more quickly respond to receiving the particular input.

In an optional example, the particular input is an application-specific input; the instructions may further cause the processor to determine that a particular application is active on the XR device; and determining that the one or more isometric contractions are associated with the particular input at the XR device is based on the particular application.

In an optional example, a surface sensor may be configured to detect a surface signal indicative of a surface; the instructions may further cause the processor to, prior to determining that the one or more fingers are performing one or more isometric contractions, (i) receive a surface signal from a surface sensor configured to detect the surface signal, wherein the surface signal is indicative of a surface proximity, (ii) determine based on the surface signal that the hand is coming into contact with a surface, and (iii) responsive to determining that the hand is coming into contact with the surface, provide a notification regarding neuromuscular inputs or instruct the XR device to provide the notification regarding neuromuscular inputs.

The instructions may further cause the processor to (i) determine based on the neuromuscular signal whether first and second fingers are isometrically contracting and (ii) responsive to detecting that the first and second fingers are contracting, determine based on the neuromuscular signal a separation distance between the first and second fingers; and determining that the one or more isometric contractions are associated with the particular input is based on the separation distance between the first and second fingers.

The neuromuscular sensor may comprise a first EMG sensor configured to detect a first set of the one or more fingers and a second EMG sensor configured to detect a second set of the one or more fingers distinct from the first set of the one or more fingers; and the neuromuscular signal may comprise EMG data corresponding to the first and second sets of the one or more fingers.

In accordance with a third aspect of the present disclosure, there is provided a method for enabling surface-based inputs in XR systems, including receiving a neuromuscular signal from a neuromuscular sensor configured to detect the neuromuscular signal, where the neuromuscular signal is indicative of a muscular contraction within a hand; determining, based on the neuromuscular signal, that one or more fingers of the hand are performing one or more isometric contractions; determining that the one or more isometric contractions are associated with a particular input at an XR device configured to perform a particular operation in response to the particular input; and responsive to determining that the one or more isometric contractions are associated with the particular input, transmitting an indication of the particular input to the XR device.

Instructions that cause performance of this and other methods and operations described herein can be stored on a non-transitory computer readable storage medium. The non-transitory computer-readable storage medium can be included on a single electronic device or spread across multiple electronic devices of a system (computing system). A non-exhaustive of list of electronic devices that can either alone or in combination (e.g., a system) perform the method and operations described herein include an XR headset/glasses (e.g., an MR headset or a pair of AR glasses), a wrist-wearable device, an intermediary processing device, a smart textile-based garment, and so on. For instance, the instructions can be stored on a pair of AR glasses or can be stored on a combination of a pair of AR glasses and an associated input device (e.g., a wrist-wearable device) such that instructions for causing detection of input operations can be performed at the input device and instructions for causing changes to a displayed user interface in response to those input operations can be performed at the pair of AR glasses. The devices and systems described herein can be configured to be used in conjunction with methods and operations for providing an XR experience. The methods and operations for providing an XR experience can be stored on a non-transitory computer-readable storage medium.

The devices and/or systems described herein can be configured to include instructions that cause the performance of methods and operations associated with presentation at an XR headset and/or interaction therewith. These methods and operations can be stored on a non-transitory computer-readable storage medium of a device or a system. It is also noted that the devices and systems described herein can be part of a larger, overarching system that includes multiple devices. A non-exhaustive of list of electronic devices that can, either alone or in combination (e.g., a system), include instructions that cause the performance of methods and operations associated with the presentation and/or interaction with an XR experience include an XR headset (e.g., an MR headset or a pair of AR glasses), a wrist-wearable device, an intermediary processing device, a smart textile-based garment, and so on. For example, when an XR headset is described, it is understood that the XR headset can be in communication with one or more other devices (e.g., a wrist-wearable device, a server, intermediary processing device) which together can include instructions for performing methods and operations associated with the presentation and/or interaction with an XR system (i.e., the XR headset would be part of a system that includes one or more additional devices). Multiple combinations with different related devices are envisioned, but not recited for brevity.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

Having summarized the above example aspects, a brief description of the drawings will now be presented.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figures 1A and 1B illustrate a hand capable of performing gestures associated with various inputs, in accordance with some embodiments.
Figures 2A to 2D illustrate gesture-based inputs in an XR system using a wearable device and isometric finger contractions, in accordance with some embodiments.
Figure 3 shows an example method flow chart for enabling surface-based inputs in XR systems, in accordance with some embodiments.
Figures 4A, 4B, 4C-1, and 4C-2 illustrate example MR and AR systems, in accordance with some embodiments.

In accordance with customary practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

### Overview

Embodiments of this disclosure can include or be implemented in conjunction with distinct types of XRs (e.g., MRs, ARs). As described herein, MR and AR systems refer to any superimposed functionality and/or sensory-detectable presentation provided by MR and AR systems within a user's physical surroundings. Certain MRs can include and/or represent virtual realities (VRs), such as VRs in which at least some aspects of the surrounding environment are reconstructed within the virtual environment (e.g., displaying virtual reconstructions of physical objects in a physical environment to avoid the user colliding with the physical objects in a surrounding physical environment).

In the case of MRs, the surrounding environment that is presented through a display is captured via one or more sensors configured to capture the surrounding environment (e.g., a camera sensor, time-of-flight (ToF) sensor). While a wearer of an MR headset can see the surrounding environment in full detail, they are seeing a reconstruction of the environment reproduced using data from the one or more sensors (i.e., the physical objects are not directly viewed by the user). An MR headset can also forgo displaying reconstructions of objects in the physical environment, thereby providing a user with an entirely VR experience. An AR system, on the other hand, provides an experience in which information is provided, e.g., through the use of a waveguide, in conjunction with the direct viewing of at least some of the surrounding environment through a transparent or semi-transparent waveguide(s) and/or lens(es) of the AR glasses. Throughout this application, the term "XR" is used as a catchall term to cover both ARs and MRs. In addition, this application also uses, at times, a head-wearable device or headset device as a catchall term that covers XR headsets such as AR glasses and MR headsets.

As alluded to above, an MR environment, as described herein, can include, but is not limited to, non-immersive, semi-immersive, and fully immersive VR environments. As also alluded to above, AR environments can include marker-based AR environments, markerless AR environments, location-based AR environments, and projection-based AR environments. The above descriptions are not exhaustive and any other environment that allows for intentional environmental lighting to pass through to the user would fall within the scope of an AR, and any other environment that does not allow for intentional environmental lighting to pass through to the user would fall within the scope of an MR.

The AR and MR content can include video, audio, haptic events, sensory events, or some combination thereof, any of which can be presented in a single channel or in multiple channels (such as stereo video that produces a three-dimensional effect to a viewer). Additionally, AR and MR can also be associated with applications, products, accessories, services, or some combination thereof, which are used, for example, to create content in an AR or MR environment and/or are otherwise used in (e.g., to perform activities in) AR and MR environments.

Interacting with these AR and MR environments described herein can occur using multiple different modalities and the resulting outputs can also occur across multiple different modalities. In one example AR or MR system, a user can perform a swiping in-air hand gesture to cause a song to be skipped by a song-providing application programming interface (API) providing playback at, for example, a home speaker.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device, and/or one or more sensors included in a smart textile wearable device) and/or detected via image data captured by an imaging device of a wearable device (e.g., a camera of a head-wearable device, an external tracking camera setup in the surrounding environment)). "In-air" generally includes gestures in which the user's hand does not contact a surface, object, or portion of an electronic device (e.g., a head-wearable device or other communicatively coupled device, such as the wrist-wearable device), in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single- or double-finger tap on a table, on a user's hand or another finger, on the user's leg, a couch, a steering wheel). In some embodiments, surface-contact gestures are performed isometrically (e.g., without noticeable movement). The different hand gestures disclosed herein can be detected using image data and/or sensor data (e.g., neuromuscular signals sensed by one or more biopotential sensors (e.g., EMG sensors) or other types of data from other sensors, such as proximity sensors, ToF sensors, sensors of an IMU, capacitive sensors, strain sensors) detected by a wearable device worn by the user and/or other electronic devices in the user's possession (e.g., smartphones, laptops, imaging devices, intermediary devices, and/or other devices described herein).

The input modalities alluded to above can be varied and are dependent on a user's experience. For example, in an interaction in which a wrist-wearable device is used, a user can provide inputs using in-air or surface-contact gestures that are detected using neuromuscular signal sensors of the wrist-wearable device. In the event that a wrist-wearable device is not used, alternative and entirely interchangeable input modalities can be used instead, such as camera(s) located on the headset/glasses or elsewhere to detect in-air or surface-contact gestures or inputs at an intermediary processing device (e.g., through physical input components (e.g., buttons and trackpads)). These different input modalities can be interchanged based on both desired user experiences, portability, and/or a feature set of the product (e.g., a low-cost product may not include hand-tracking cameras).

While the inputs are varied, the resulting outputs stemming from the inputs are also varied. For example, an in-air gesture input detected by a camera of a head-wearable device can cause an output to occur at a head-wearable device or control another electronic device different from the head-wearable device. In another example, an input detected using data from a neuromuscular signal sensor can also cause an output to occur at a head-wearable device or control another electronic device different from the head-wearable device. While only a couple examples are described above, one skilled in the art would understand that different input modalities are interchangeable along with different output modalities in response to the inputs.

Specific operations described above may occur as a result of specific hardware. The devices described are not limiting and features on these devices can be removed or additional features can be added to these devices. The different devices can include one or more analogous hardware components. For brevity, analogous devices and components are described herein. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device, a head-wearable device, a handheld intermediary processing device (HIPD), a smart textile-based garment, or other computer system). There are distinct types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., VR animations, such as three-dimensional modeling); (iv) a field-programmable gate array (FPGA) that can be programmed and reconfigured after manufacturing and/or customized to perform specific tasks, such as signal processing, cryptography, and machine learning; or (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs. As described herein, a graphics module is a component or software module that is designed to handle graphical operations and/or processes and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or (v) any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) pogo pins, which may be small, spring-loaded pins configured to provide a charging interface; (v) wireless charging interfaces; (vi) global-positioning system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device, such as a simultaneous localization and mapping (SLAM) camera); (ii) biopotential-signal sensors; (iii) IMUs for detecting, for example, angular rate, force, magnetic field, and/or changes in acceleration; (iv) heart rate sensors for measuring a user's heart rate; (v) peripheral oxygen saturation (SpO₂) sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) sensors for detecting some inputs (e.g., capacitive and force sensors); and (viii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) EMG sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; (xiii) AR and MR applications; and/or (xiv) any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). A communication interface can refer to a software layer that enables different software programs to communicate with each other (e.g., APIs and protocols such as HTTP and TCP/IP).

As described herein, a graphics module is a component or software module that is designed to handle graphical operations and/or processes and can include a hardware module and/or a software module.

As described herein, non-transitory computer-readable storage media are physical devices or storage medium that can be used to store electronic data in a non-transitory form (e.g., such that the data is stored permanently until it is intentionally deleted and/or modified).

### Gesture-Based Inputs

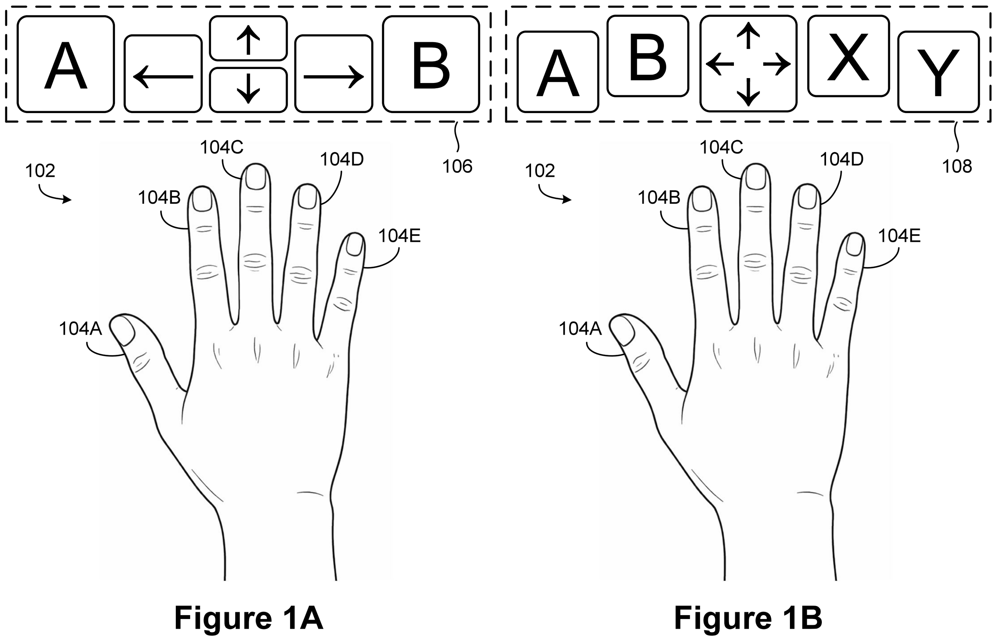

Figures 1A and 1B illustrate a hand 102 capable of performing gestures corresponding to a plurality of inputs 106 or 108. Gestures performed by the hand 102 can be detected, for instance, by a wrist-wearable device (e.g., wearable device 206, wrist-wearable device 426). In some embodiments, the gestures involve isometric contractions of one or more of the fingers 104A-E of the hand. As an example, a user can isometrically contract one of their fingers by pressing it against a surface, such as a tabletop, a wall, or a part of their body (e.g., top of thigh). As used herein, "isometric" describes a muscle contraction where the muscle tenses without a noticeable change in the length of the muscle (e.g., resulting in no discernible movement). In this manner, contracting one of more of the fingers 104A-E can cause one or more corresponding inputs 106 or 108 at an XR device.

In some embodiments, one or more of the fingers 104A-E is mapped to one or more of the inputs 106 or 108. For example, Figure 1A illustrates six different inputs 106: an "A" key, a "B" key, and directional inputs including "up," "down," "left," and "right" keys. In order to allow the user to enter each of these inputs, the user's thumb 104A can be mapped, for instance, to the "A" key; the user's pinky 104E, to the "B" key, the user's pointer and ring fingers 104B and 104D, to the "left" and "right" keys, respectively; and the user's middle finger 104C can be mapped to both the "up" and "down" keys. In some embodiments, a contraction intensity of the user's middle finger 104C is used to determine whether to trigger the "up" or "down" key. Additionally, or alternatively, other factors can also be used to determine which of the "up" and "down" keys to trigger, such as whether the finger 104C is bending towards the user's palm or extending away from it, or whether the finger 104C is pressing lightly or heavily on a surface (e.g., 208). In this way, a user can provide a rich set of inputs using only the fingers of a single hand, without requiring a physical controller or other input device. Moreover, in this and in other embodiments, finger contraction combinations can also be used to trigger certain inputs (e.g., contracting thumb 104A and ring finger 104D in order to trigger the "B" key).

As another example, Figure 1B illustrates eight different inputs 108: "A," "B," "X," and "Y" keys, as well as directional "up," "down," "left," and "right" keys. As with the inputs 106 of Figure 1A, these inputs 108 can also be mapped to a user's fingers 104A-E. Of particular note are the directional keys, all of which can be mapped to a single finger such as the middle finger 104C. By monitoring neuromuscular (e.g., EMG) signals associated with the finger 104C, a wrist-wearable device (e.g., wearable device 206, wrist-wearable device 426) or another device connected thereto can determine a direction in which the finger is contracting. Thereafter, the device can translate the direction of contraction into a directional input. For instance, if the finger 104C is contracting towards the user's palm (e.g., in a "downward" direction), then the device can trigger the "down" key, and so on for each other directional input. In this manner, the user can use a single finger for multiple inputs, including simultaneous inputs (e.g., up-left, upright, down-right, down-left).

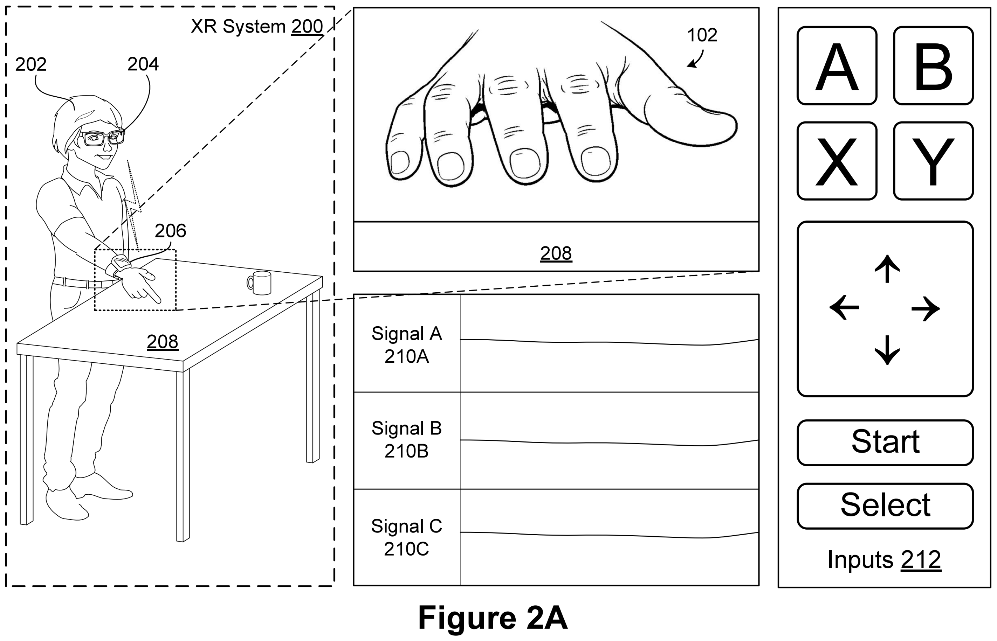

Figures 2A to 2D illustrate gesture-based inputs in an XR system 200 using a wearable device 206 and isometric finger contractions, in accordance with some embodiments. The system 200 includes an XR device 204, which is worn by a user 202 standing next to a surface 208 on which the user 202 can perform isometric input gestures (e.g., by pressing one or more of their fingers against the surface 208).

In the illustrated embodiment, gestures performed by the user 202 are determined based at least in part on neuromuscular signals 210A-C detected by one or more neuromuscular sensors (e.g., EMG sensors) of the wearable device 206. Gesture determination (e.g., recognition) can also be based on signals from other sensors, such as signals from an inertial measurement unit or a camera (e.g., a camera of XR device 204). As with figures 1A and 1B, figures 2A to 2D also include various inputs 212 that the user 202 can trigger by performing the gestures. Figures 2A to 2D also include a close-up view of the user's hand 102 and the surface 208 beneath it, thereby indicating a gesture currently being performed by the hand 102.

In figure 2A, the hand 102 hovers above the surface 208 without contracting any of its fingers (e.g., fingers 104A-E) or coming into contact with the surface 208. Accordingly, each of the neuromuscular signals 210A-C is relatively flat, and none of the inputs 212 are triggered (although, in some embodiments, the lack of an isometric contraction is used to trigger an input).

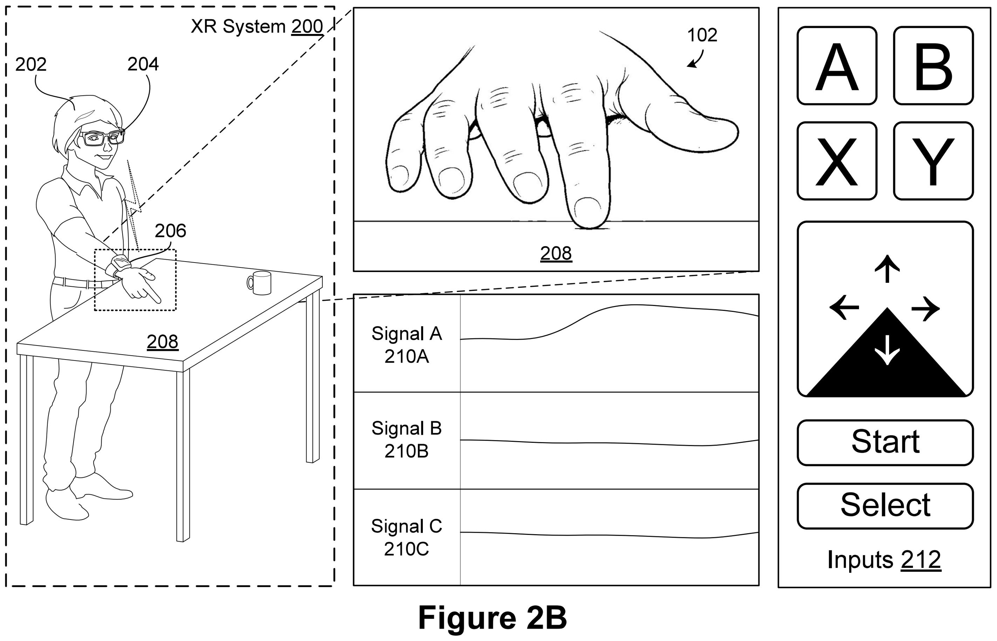

In figure 2B, however, the user 202 brings the pointer finger (e.g., finger 104B) of their hand 102 into contact with the surface 208. This causes signal 210A to exceed a first predetermined threshold, which leads to the wearable device 206 or another device connected thereto (e.g., XR device 204) to determine that the user 202 is isometrically contracting their pointer finger and/or pressing their pointer finger against the surface 208. Accordingly, the wearable device 206 or the other device connected thereto triggers one of the inputs 212, namely, a "down" input. This input can be used to control a character in an XR video game, to navigate an XR menu, or to perform any other action in an XR environment.

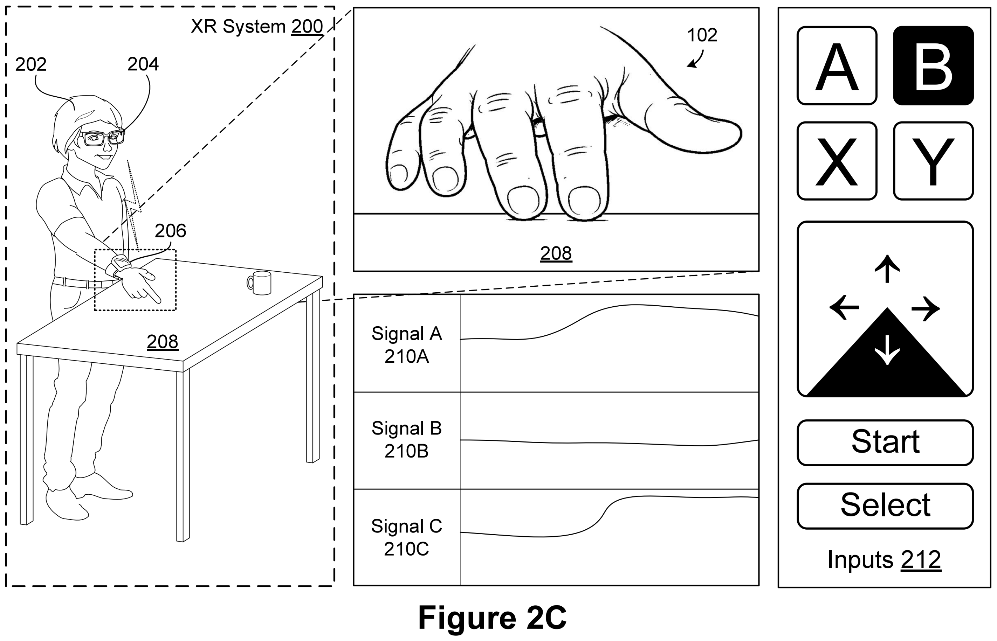

In figure 2C, the user 202 presses their pointer finger (e.g., finger 104B) and their middle finger (e.g., finger 104C) against the surface 208, causing both fingers to isometrically contract. The isometric contractions required for this gesture are reflected in signals 210A and 210C, which lead to the triggering of two inputs 212, the aforenoted "down" input and a "B" input.

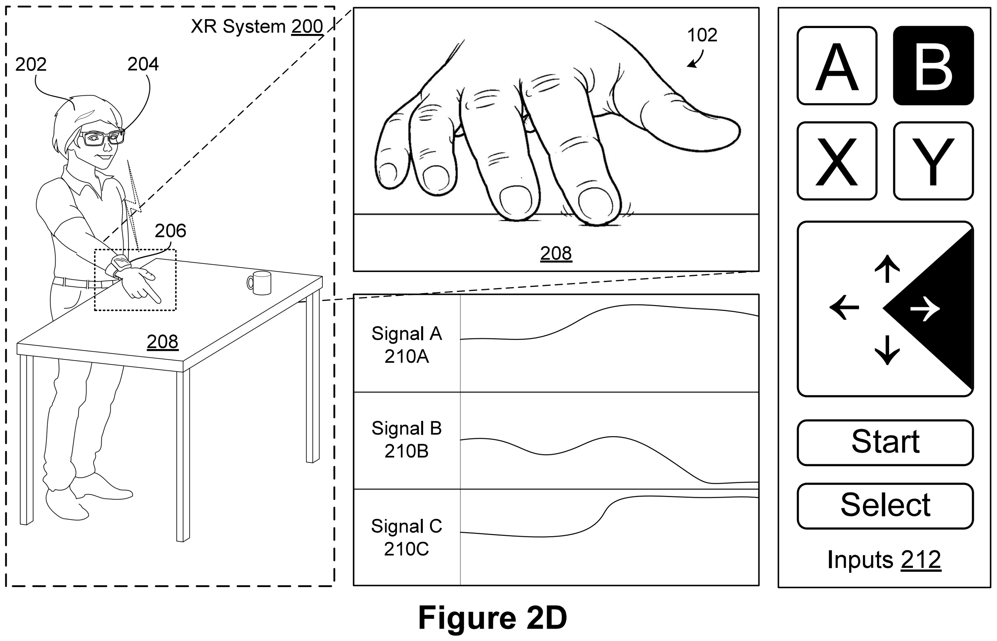

In figure 2D, the user 202 leans their pointer finger (e.g., finger 104B) to their right while keeping their pointer finger and middle finger (e.g., finger 104C) in contact with the surface 208. This is reflected in signals 210A-C, which lead to the triggering of two inputs 212, the aforenoted "B" input and a "right" input. In this manner, and as noted for figures 1A and 1B, a single finger (e.g., finger 104B) can be used to trigger multiple different inputs based, for instance, on whether the finger is leaning in a particular direction. Other factors can also be used to determine whether to trigger a particular input of a plurality of different input based on the isometric contractions detected for a particular finger, such as an intensity of the contractions within the finger (e.g., indicative of how hard the finger is pressing against the surface), or a difference between a current intensity of the contractions and a previous amount of contractions detected within the finger. Additionally, inputs other than the inputs 212 illustrated in figures 2A to 2D are also contemplated. In some embodiments, for instance, the inputs 212 comprise a keyboard such that the user can type by pressing against the surface.

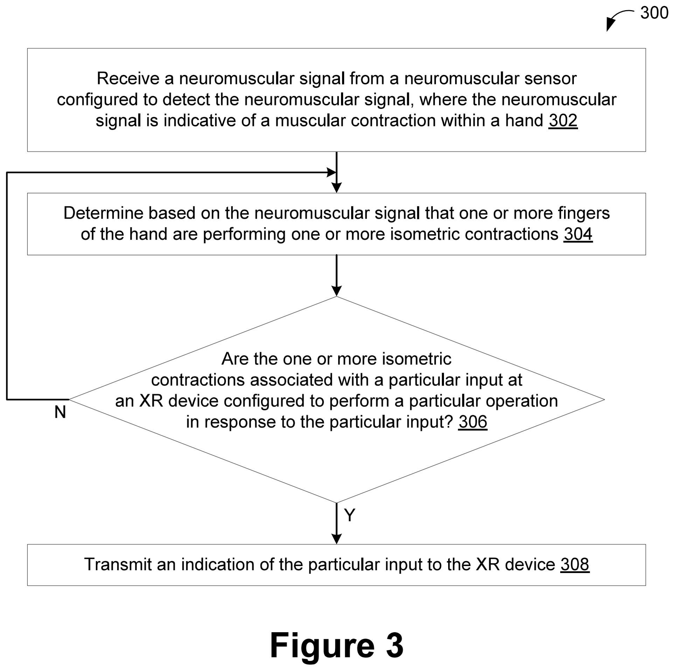

Figure 3 shows an example method flow chart 300 for enabling surface-based inputs in XR systems (e.g., XR systems 200, 400a-b, MR system 400c), in accordance with some embodiments. At least some of the operations shown in figure 3 correspond to instructions stored in a computer memory or computer-readable storage medium (e.g., storage, RAM, and/or memory). Operations of the method 300 can be performed by a single device alone (e.g., wearable device 206, wrist-wearable device 426) or in conjunction with one or more processors and/or hardware components of another communicatively coupled device (e.g., AR device 428, 442) and/or instructions stored in memory or computer-readable medium of the other device communicatively coupled to the XR system. In some embodiments, the various operations of the methods described herein are interchangeable and/or optional, and respective operations of the methods are performed by any of the aforementioned devices, systems, or combination of devices and/or systems. For convenience, the method operations may be described below as being performed by particular component or device, but should not be construed as limiting the performance of the operation to the particular device in all embodiments.

(A1) The method 300 includes receiving (302) a neuromuscular signal (e.g., signals 210A-C) from a neuromuscular sensor of a wearable device (e.g., wearable device 206), where the neuromuscular sensor is configured to detect the neuromuscular signal, and the neuromuscular signal is indicative of a muscular contraction within a hand (e.g., hand 102). The muscular contraction can be caused by a user pressing the hand (e.g., one or more fingers thereof) against a surface (e.g., surface 208) as discussed for figures 2A to 2D.

The method 300 also includes determining (304), based on the neuromuscular signal, that one or more fingers (e.g., fingers 104A-E) of the hand are performing one or more isometric contractions. The neuromuscular signal can be an EMG signal detected by one or more EMG sensors of a wearable device (e.g., wearable device 206). This determination can include determining whether the neuromuscular signal satisfies (e.g., meets, exceeds) a predetermined threshold.

Additionally, the method 300 includes determining (306) whether the one or more isometric contractions are associated with a particular input (e.g., inputs 106, 108, 212) at an XR device (e.g., XR device 204, AR device 428, MR device 432) configured to perform a particular operation in response to the particular input. Determining whether the one or more isometric contractions are associated with a particular input can be performed on a finger-by-finger basis, for instance, by determining whether a first finger (e.g., finger 104A) is isometrically contracting, whether a second finger (e.g., finger 104B) is isometrically contracting, and so on.

Further, the method 300 includes, responsive to determining that the one or more isometric contractions are associated with the particular input, transmitting (308) an indication of the particular input to the XR device. Transmitting the indication to the XR device can include transmitting an indication of one or more inputs to the XR device, where the inputs are directional keys or letter keys (e.g., for a gamepad or keyboard).

(A2) In some embodiments of A1, the method 300 further includes determining, based on the neuromuscular signal, whether first, second, or third fingers (e.g., fingers 104A-C) of the one or more fingers are isometrically contracting, where the first finger is associated with a first input (e.g., an "A" input), the second finger is associated with a second input (e.g., a "B" input), and the third finger is associated with a third input (e.g., one or more directional inputs of a plurality of directional inputs). This method also includes, responsive to determining that the first finger is isometrically contracting, transmitting an indication of the first input to the XR device; responsive to determining that the second finger is isometrically contracting, transmitting an indication of the second input to the XR device; and, responsive to determining that the third finger is isometrically contracting, transmitting an indication of the third input to the XR device. In such embodiments, the XR device is further configured to perform a first operation (e.g., a jump command in a videogame) in response to the first input, a second operation (e.g., a punch command in a videogame) in response to the second input, and a third operation in response to the third input (e.g., a movement command in a videogame).

(A3) In some embodiments of A2, the method 300 further includes, responsive to determining that the first finger is isometrically contracting, determining based on the neuromuscular signal a direction in which the first finger is isometrically contracting (see, e.g., figure 2D). In such embodiments, transmitting the indication of the first input includes transmitting an indication of the direction in which the first finger is isometrically contracting, where the XR device is further configured to perform the first operation based on the indication of the direction in which the first finger is isometrically contracting.

(A4) In some embodiments of A2, the method 300 further includes, responsive to determining that the first finger is isometrically contracting, determining based on the neuromuscular signal an intensity at which the first finger is isometrically contracting. In such embodiments, transmitting the indication of the first input includes transmitting an indication of the intensity at which the first finger is isometrically contracting, where the XR device is further configured to perform the first operation based on the indication of the intensity at which the first finger is isometrically contracting.

(A5) In some embodiments of A1, the method 300 further includes transmitting the indication of the particular input to the XR device prior to the particular input being received at the XR device via an input pad connected to the XR device. The particular operation comprises performing a latency-reduction operation preparatory to receiving the particular input from the input device such that the XR device is able to more quickly respond to receiving the particular input. These embodiments of the method can be employed in tandem with physical input devices (e.g., a keyboard, a controller) in order to reduce input latency by predicting a button press or keystroke before the user fully depresses the corresponding button or key.

(A6) In some embodiments of A1, the particular input is an application-specific input. In such embodiments, the processor is further configured to determine that a particular application is active on the XR device. Additionally, in such embodiments, determining that the one or more isometric contractions are associated with the particular input at the XR device is based on the particular application.

(A7) In some embodiments of A1, the wearable device further includes a surface sensor configured to detect a surface signal indicative of a surface proximity. In such embodiments, the method further includes, prior to determining that the one or more fingers are performing one or more isometric contractions, (i) receive the surface signal from the surface sensor, (ii) determine based on the surface signal that the hand is coming into contact with a surface, and (iii) responsive to determining that the hand is coming into contact with the surface, provide a notification regarding neuromuscular inputs or instruct the XR device to provide the notification regarding neuromuscular inputs.

(A8) In some embodiments of A1, the method 300 further includes determining, based on the neuromuscular signal, whether first and second fingers are isometrically contracting, and, responsive to detecting that the first and second fingers are contracting, determining, based on the neuromuscular signal, a separation distance between the first and second fingers. In such embodiments, determining that the one or more isometric contractions are associated with the particular input is based on the separation distance between the first and second fingers.

(A9) In some embodiments of A1, the neuromuscular sensor includes a first EMG sensor configured to detect a first set of the one or more fingers (e.g., finger 104A) and a second EMG sensor configured to detect a second set of the one or more fingers (e.g., fingers 104B-E) distinct from the first set of the one or more fingers. In such embodiments, the neuromuscular signal comprises EMG data corresponding to the first and second sets of the one or more fingers.

(A10) In some embodiments of A1, the method 300 further includes, after receiving the neuromuscular signal at a particular time, receiving another neuromuscular signal at a subsequent time and determining, based on the other neuromuscular signal, that the one or more fingers of the hand are performing one or more other isometric contractions. In such embodiments, the method further includes determining that the one or more other isometric contractions are associated with another particular input at the XR device, where the XR device is further configured to perform another particular operation in response to the other particular input. In such embodiments, the method further includes, responsive to determining that the one or more other isometric contractions are associated with the other particular input, transmitting an indication of the other particular input to the XR device.

(B1) In accordance with some embodiments, a system (e.g., XR system 200, 400a-b, MR system 400c) that includes one or more wrist wearable devices (e.g., wearable device 206, wrist-wearable device 426) and a pair of AR glasses (e.g., XR device 204), and the system is configured to perform operations corresponding to any of A1-A10.

(C1) In accordance with some embodiments, a non-transitory computer readable storage medium includes instructions that, when executed by a computing device (e.g., wearable device 206, wrist-wearable device 426, HIPD 442) in communication with a pair of AR glasses (e.g., XR device 204), cause the computer device to perform operations corresponding to any of A1-A10.

(D1) In accordance with some embodiments, a method of operating a pair of AR glasses (e.g., XR device 204) includes operations that correspond to any of A1-A10.

### Example XR Systems

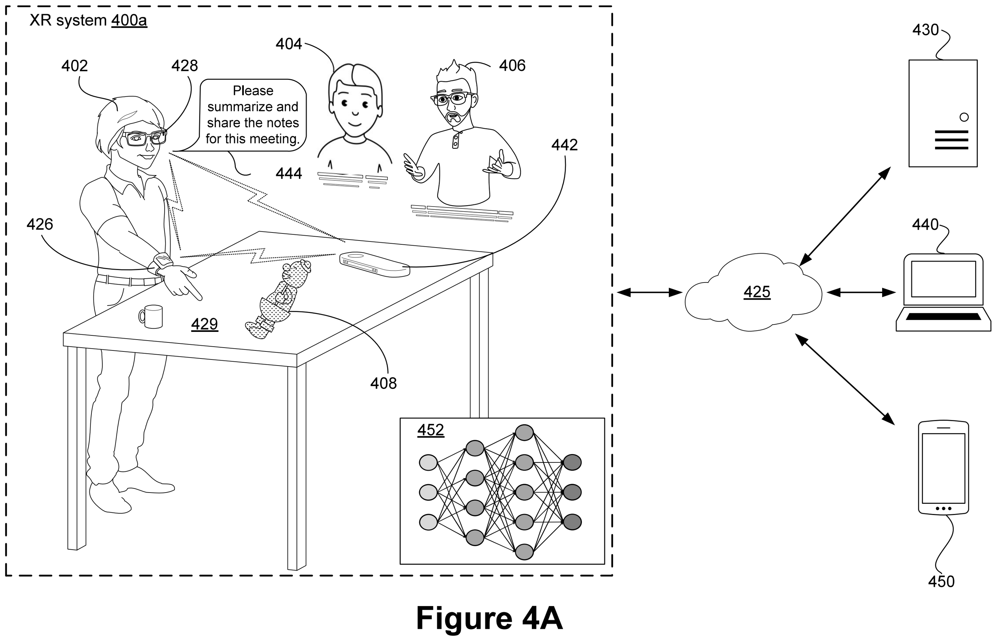

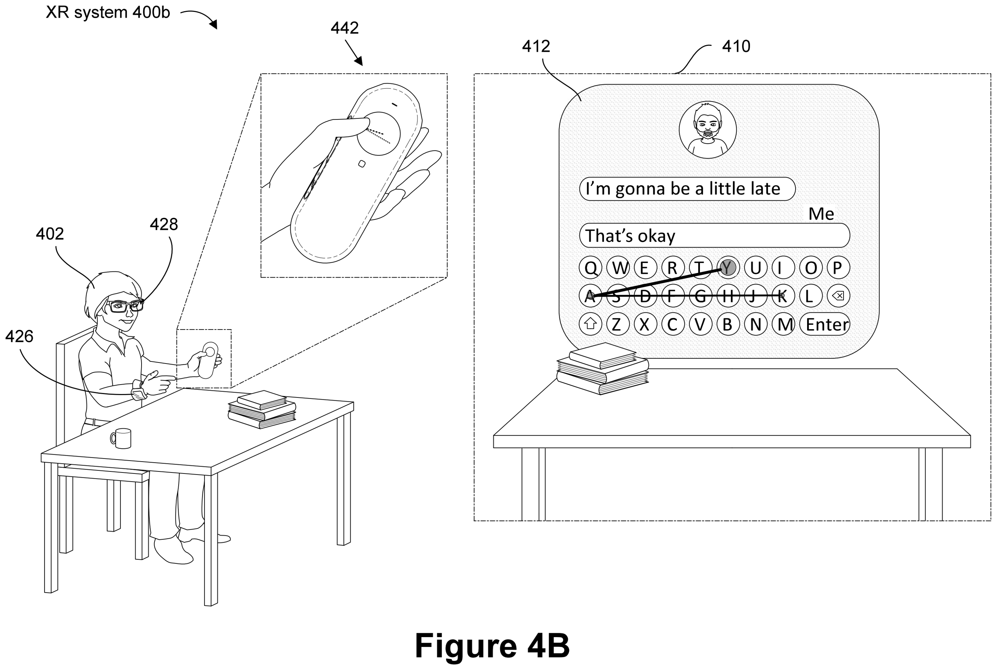

Figures 4A, 4B, 4C-1, and 4C-2, illustrate example XR systems that include AR and MR systems, in accordance with some embodiments. Figure 4A shows a first XR system 400a and first example user interactions using a wrist-wearable device 426, a head-wearable device (e.g., AR device 428), and/or a HIPD 442. Figure 4B shows a second XR system 400b and second example user interactions using a wrist-wearable device 426, AR device 428, and/or an HIPD 442. Figures 4C-1 and 4C-2 show a third MR system 400c and third example user interactions using a wrist-wearable device 426, a head-wearable device (e.g., an MR device such as a VR device), and/or an HIPD 442. As the skilled artisan will appreciate upon reading the descriptions provided herein, the above-example AR and MR systems (described in detail below) can perform various functions and/or operations.

The wrist-wearable device 426, the head-wearable devices, and/or the HIPD 442 can communicatively couple via a network 425 (e.g., cellular, near field, Wi-Fi, personal area network, wireless LAN). Additionally, the wrist-wearable device 426, the head-wearable device, and/or the HIPD 442 can also communicatively couple with one or more servers 430, computers 440 (e.g., laptops, computers), mobile devices 450 (e.g., smartphones, tablets), and/or other electronic devices via the network 425 (e.g., cellular, near field, Wi-Fi, personal area network, wireless LAN). Similarly, a smart textile-based garment, when used, can also communicatively couple with the wrist-wearable device 426, the head-wearable device(s), the HIPD 442, the one or more servers 430, the computers 440, the mobile devices 450, and/or other electronic devices via the network 425 to provide inputs.

Turning to Figure 4A, a user 402 is shown wearing the wrist-wearable device 426 and the AR device 428 and having the HIPD 442 on their desk. The wrist-wearable device 426, the AR device 428, and the HIPD 442 facilitate user interaction with an AR environment. In particular, as shown by the first AR system 400a, the wrist-wearable device 426, the AR device 428, and/or the HIPD 442 cause presentation of one or more avatars 404, digital representations of contacts 406, and virtual objects 408. As discussed below, the user 402 can interact with the one or more avatars 404, digital representations of the contacts 406, and virtual objects 408 via the wrist-wearable device 426, the AR device 428, and/or the HIPD 442. In addition, the user 402 is also able to directly view physical objects in the environment, such as a physical table 429, through transparent lens(es) and waveguide(s) of the AR device 428. Alternatively, an MR device could be used in place of the AR device 428 and a similar user experience can take place, but the user would not be directly viewing physical objects in the environment, such as table 429, and would instead be presented with a virtual reconstruction of the table 429 produced from one or more sensors of the MR device (e.g., an outward facing camera capable of recording the surrounding environment).

The user 402 can use any of the wrist-wearable device 426, the AR device 428 (e.g., through physical inputs at the AR device and/or built-in motion tracking of a user's extremities), a smart-textile garment, externally mounted extremity tracking device, the HIPD 442 to provide user inputs, etc. For example, the user 402 can perform one or more hand gestures that are detected by the wrist-wearable device 426 (e.g., using one or more EMG sensors and/or IMUs built into the wrist-wearable device) and/or AR device 428 (e.g., using one or more image sensors or cameras) to provide a user input. Alternatively, or additionally, the user 402 can provide a user input via one or more touch surfaces of the wrist-wearable device 426, the AR device 428, and/or the HIPD 442, and/or voice commands captured by a microphone of the wrist-wearable device 426, the AR device 428, and/or the HIPD 442. The wrist-wearable device 426, the AR device 428, and/or the HIPD 442 include an artificially intelligent digital assistant to help the user in providing a user input (e.g., completing a sequence of operations, suggesting different operations or commands, providing reminders, confirming a command). For example, the digital assistant can be invoked through an input occurring at the AR device 428 (e.g., via an input at a temple arm of the AR device 428). In some embodiments, the user 402 can provide a user input via one or more facial gestures and/or facial expressions. For example, cameras of the wrist-wearable device 426, the AR device 428, and/or the HIPD 442 can track the user 402's eyes for navigating a user interface.

The wrist-wearable device 426, the AR device 428, and/or the HIPD 442 can operate alone or in conjunction to allow the user 402 to interact with the AR environment. In some embodiments, the HIPD 442 is configured to operate as a central hub or control center for the wrist-wearable device 426, the AR device 428, and/or another communicatively coupled device. For example, the user 402 can provide an input to interact with the AR environment at any of the wrist-wearable device 426, the AR device 428, and/or the HIPD 442, and the HIPD 442 can identify one or more back-end and front-end tasks to cause the performance of the requested interaction and distribute instructions to cause the performance of the one or more back-end and front-end tasks at the wrist-wearable device 426, the AR device 428, and/or the HIPD 442. In some embodiments, a back-end task is a background-processing task that is not perceptible by the user (e.g., rendering content, decompression, compression, application-specific operations), and a front-end task is a user-facing task that is perceptible to the user (e.g., presenting information to the user, providing feedback to the user). The HIPD 442 can perform the back-end tasks and provide the wrist-wearable device 426 and/or the AR device 428 operational data corresponding to the performed back-end tasks such that the wrist-wearable device 426 and/or the AR device 428 can perform the front-end tasks. In this way, the HIPD 442, which has more computational resources and greater thermal headroom than the wrist-wearable device 426 and/or the AR device 428, performs computationally intensive tasks and reduces the computer resource utilization and/or power usage of the wrist-wearable device 426 and/or the AR device 428.

In the example shown by the first AR system 400a, the HIPD 442 identifies one or more back-end tasks and front-end tasks associated with a user request to initiate an AR video call with one or more other users (represented by the avatar 404 and the digital representation of the contact 406) and distributes instructions to cause the performance of the one or more back-end tasks and front-end tasks. In particular, the HIPD 442 performs back-end tasks for processing and/or rendering image data (and other data) associated with the AR video call and provides operational data associated with the performed back-end tasks to the AR device 428 such that the AR device 428 performs front-end tasks for presenting the AR video call (e.g., presenting the avatar 404 and the digital representation of the contact 406).

In some embodiments, the HIPD 442 can operate as a focal or anchor point for causing the presentation of information. This allows the user 402 to be generally aware of where information is presented. For example, as shown in the first AR system 400a, the avatar 404 and the digital representation of the contact 406 are presented above the HIPD 442. In particular, the HIPD 442 and the AR device 428 operate in conjunction to determine a location for presenting the avatar 404 and the digital representation of the contact 406. In some embodiments, information can be presented within a predetermined distance from the HIPD 442 (e.g., within five meters). For example, as shown in the first AR system 400a, virtual object 408 is presented on the desk some distance from the HIPD 442. Similar to the above example, the HIPD 442 and the AR device 428 can operate in conjunction to determine a location for presenting the virtual object 408. Alternatively, in some embodiments, presentation of information is not bound by the HIPD 442. More specifically, the avatar 404, the digital representation of the contact 406, and the virtual object 408 do not have to be presented within a predetermined distance of the HIPD 442. While an AR device 428 is described working with an HIPD, an MR headset can be interacted with in the same way as the AR device 428.

User inputs provided at the wrist-wearable device 426, the AR device 428, and/or the HIPD 442 are coordinated such that the user can use any device to initiate, continue, and/or complete an operation. For example, the user 402 can provide a user input to the AR device 428 to cause the AR device 428 to present the virtual object 408 and, while the virtual object 408 is presented by the AR device 428, the user 402 can provide one or more hand gestures via the wrist-wearable device 426 to interact and/or manipulate the virtual object 408. While an AR device 428 is described working with a wrist-wearable device 426, an MR headset can be interacted with in the same way as the AR device 428.

### Integration of Artificial Intelligence with XR Systems

Figure 4A illustrates an interaction in which an artificially intelligent virtual assistant can assist in requests made by a user 402. The AI virtual assistant can be used to complete open-ended requests made through natural language inputs by a user 402. For example, in Figure 4A the user 402 makes an audible request 444 to summarize the conversation and then share the summarized conversation with others in the meeting. In addition, the AI virtual assistant is configured to use sensors of the XR system (e.g., cameras of an XR headset, microphones, and various other sensors of any of the devices in the system) to provide contextual prompts to the user for initiating tasks.

Figure 4A also illustrates an example neural network 452 used in Artificial Intelligence applications. Uses of Artificial Intelligence (AI) are varied and encompass many distinct aspects of the devices and systems described herein. AI capabilities cover a diverse range of applications and deepen interactions between the user 402 and user devices (e.g., the AR device 428, an MR device 432, the HIPD 442, the wrist-wearable device 426). The AI discussed herein can be derived using many different training techniques. While the primary AI model example discussed herein is a neural network, other AI models can be used. Non-limiting examples of AI models include artificial neural networks (ANNs), deep neural networks (DNNs), convolution neural networks (CNNs), recurrent neural networks (RNNs), large language models (LLMs), long short-term memory networks, transformer models, decision trees, random forests, support vector machines, k-nearest neighbors, genetic algorithms, Markov models, Bayesian networks, fuzzy logic systems, and deep reinforcement learnings, etc. The AI models can be implemented at one or more of the user devices, and/or any other devices described herein. For devices and systems herein, that employ multiple AI models, different models can be used depending on the task. For example, for a natural-language artificially intelligent virtual assistant, an LLM can be used and for the object detection of a physical environment, a DNN can be used instead.

In another example, an AI virtual assistant can include many different AI models and based on the user's request, multiple AI models may be employed (concurrently, sequentially or a combination thereof). For example, an LLM-based AI model can provide instructions for helping a user follow a recipe and the instructions can be based in part on another AI model that is derived from an ANN, a DNN, an RNN, etc. that is capable of discerning what part of the recipe the user is on (e.g., object and scene detection).

As AI training models evolve, the operations and experiences described herein could potentially be performed with different models other than those listed above, and a person skilled in the art would understand that the list above is non-limiting.

A user 402 can interact with an AI model through natural language inputs captured by a voice sensor, text inputs, or any other input modality that accepts natural language and/or a corresponding voice sensor module. In another instance, input is provided by tracking the eye gaze of a user 402 via a gaze tracker module. Additionally, the AI model can also receive inputs beyond those supplied by a user 402. For example, the AI can generate its response further based on environmental inputs (e.g., temperature data, image data, video data, ambient light data, audio data, GPS location data, inertial measurement (i.e., user motion) data, pattern recognition data, magnetometer data, depth data, pressure data, force data, neuromuscular data, heart rate data, temperature data, sleep data) captured in response to a user request by various types of sensors and/or their corresponding sensor modules. The sensors' data can be retrieved entirely from a single device (e.g., AR device 428) or from multiple devices that are in communication with each other (e.g., a system that includes at least two of an AR device 428, an MR device 432, the HIPD 442, the wrist-wearable device 426, etc.). The AI model can also access additional information (e.g., one or more servers 430, the computers 440, the mobile devices 450, and/or other electronic devices) via a network 425.

A non-limiting list of AI-enhanced functions includes but is not limited to image recognition, speech recognition (e.g., automatic speech recognition), text recognition (e.g., scene text recognition), pattern recognition, natural language processing and understanding, classification, regression, clustering, anomaly detection, sequence generation, content generation, and optimization. In some embodiments, AI-enhanced functions are fully or partially executed on cloud-computing platforms communicatively coupled to the user devices (e.g., the AR device 428, an MR device 432, the HIPD 442, the wrist-wearable device 426) via the one or more networks. The cloud-computing platforms provide scalable computing resources, distributed computing, managed AI services, interference acceleration, pre-trained models, APIs, and/or other resources to support comprehensive computations required by the AI-enhanced function.

Example outputs stemming from the use of an AI model can include natural language responses, mathematical calculations, charts displaying information, audio, images, videos, texts, summaries of meetings, predictive operations based on environmental factors, classifications, pattern recognitions, recommendations, assessments, or other operations. In some embodiments, the generated outputs are stored on local memories of the user devices (e.g., the AR device 428, an MR device 432, the HIPD 442, the wrist-wearable device 426), storage options of the external devices (servers, computers, mobile devices, etc.), and/or storage options of the cloud-computing platforms.

The AI-based outputs can be presented across different modalities (e.g., audio-based, visual-based, haptic-based, and any combination thereof) and across different devices of the XR system described herein. Some visual-based outputs can include the displaying of information on XR augments of an XR headset, user interfaces displayed at a wrist-wearable device, laptop device, mobile device, etc. On devices with or without displays (e.g., HIPD 442), haptic feedback can provide information to the user 402. An AI model can also use the inputs described above to determine the appropriate modality and device(s) to present content to the user (e.g., a user walking on a busy road can be presented with an audio output instead of a visual output to avoid distracting the user 402).

### Example AR Interaction

Figure 4B shows the user 402 wearing the wrist-wearable device 426 and the AR device 428 and holding the HIPD 442. In the second AR system 400b, the wrist-wearable device 426, the AR device 428, and/or the HIPD 442 are used to receive and/or provide one or more messages to a contact of the user 402. In particular, the wrist-wearable device 426, the AR device 428, and/or the HIPD 442 detect and coordinate one or more user inputs to initiate a messaging application and prepare a response to a received message via the messaging application.

In some embodiments, the user 402 initiates, via a user input, an application on the wrist-wearable device 426, the AR device 428, and/or the HIPD 442 that causes the application to initiate on at least one device. For example, in the second AR system 400b the user 402 performs a hand gesture associated with a command for initiating a messaging application (represented by messaging user interface 412); the wrist-wearable device 426 detects the hand gesture; and, based on a determination that the user 402 is wearing the AR device 428, causes the AR device 428 to present a messaging user interface 412 of the messaging application. The AR device 428 can present the messaging user interface 412 to the user 402 via its display (e.g., as shown by user 402's field of view 410). In some embodiments, the application is initiated and can be run on the device (e.g., the wrist-wearable device 426, the AR device 428, and/or the HIPD 442) that detects the user input to initiate the application, and the device provides another device operational data to cause the presentation of the messaging application. For example, the wrist-wearable device 426 can detect the user input to initiate a messaging application, initiate and run the messaging application, and provide operational data to the AR device 428 and/or the HIPD 442 to cause presentation of the messaging application. Alternatively, the application can be initiated and run at a device other than the device that detected the user input. For example, the wrist-wearable device 426 can detect the hand gesture associated with initiating the messaging application and cause the HIPD 442 to run the messaging application and coordinate the presentation of the messaging application.

Further, the user 402 can provide a user input provided at the wrist-wearable device 426, the AR device 428, and/or the HIPD 442 to continue and/or complete an operation initiated at another device. For example, after initiating the messaging application via the wrist-wearable device 426 and while the AR device 428 presents the messaging user interface 412, the user 402 can provide an input at the HIPD 442 to prepare a response (e.g., shown by the swipe gesture performed on the HIPD 442). The user 402's gestures performed on the HIPD 442 can be provided and/or displayed on another device. For example, the user 402's swipe gestures performed on the HIPD 442 are displayed on a virtual keyboard of the messaging user interface 412 displayed by the AR device 428.

In some embodiments, the wrist-wearable device 426, the AR device 428, the HIPD 442, and/or other communicatively coupled devices can present one or more notifications to the user 402. The notification can be an indication of a new message, an incoming call, an application update, a status update, etc. The user 402 can select the notification via the wrist-wearable device 426, the AR device 428, or the HIPD 442 and cause presentation of an application or operation associated with the notification on at least one device. For example, the user 402 can receive a notification that a message was received at the wrist-wearable device 426, the AR device 428, the HIPD 442, and/or other communicatively coupled device and provide a user input at the wrist-wearable device 426, the AR device 428, and/or the HIPD 442 to review the notification, and the device detecting the user input can cause an application associated with the notification to be initiated and/or presented at the wrist-wearable device 426, the AR device 428, and/or the HIPD 442.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 428 can present to the user 402 game application data and the HIPD 442 can use a controller to provide inputs to the game. Similarly, the user 402 can use the wrist-wearable device 426 to initiate a camera of the AR device 428, and the user can use the wrist-wearable device 426, the AR device 428, and/or the HIPD 442 to manipulate the image capture (e.g., zoom in or out, apply filters) and capture image data.

While an AR device 428 is shown being capable of certain functions, it is understood that an AR device can be an AR device with varying functionalities based on costs and market demands. For example, an AR device may include a single output modality such as an audio output modality. In another example, the AR device may include a low-fidelity display as one of the output modalities, where simple information (e.g., text and/or low-fidelity images/video) is capable of being presented to the user. In yet another example, the AR device can be configured with face-facing light emitting diodes (LEDs) configured to provide a user with information, e.g., an LED around the right-side lens can illuminate to notify the wearer to turn right while directions are being provided or an LED on the left-side can illuminate to notify the wearer to turn left while directions are being provided. In another embodiment, the AR device can include an outward-facing projector such that information (e.g., text information, media) may be displayed on the palm of a user's hand or other suitable surface (e.g., a table, whiteboard). In yet another embodiment, information may also be provided by locally dimming portions of a lens to emphasize portions of the environment in which the user's attention should be directed. Some AR devices can present AR augments either monocularly or binocularly (e.g., an AR augment can be presented at only a single display associated with a single lens as opposed presenting an AR augmented at both lenses to produce a binocular image). In some instances, an AR device capable of presenting AR augments binocularly can optionally display AR augments monocularly as well (e.g., for power-saving purposes or other presentation considerations). These examples are non-exhaustive and features of one AR device described above can be combined with features of another AR device described above. While features and experiences of an AR device have been described generally in the preceding sections, it is understood that the described functionalities and experiences can be applied in an analogous manner to an MR headset, which is described below in the proceeding sections.

### Example MR Interaction

Turning to Figures 4C-1 and 4C-2, the user 402 is shown wearing the wrist-wearable device 426 and an MR device 432 (e.g., a device capable of providing either an entirely VR experience or an MR experience that displays object(s) from a physical environment at a display of the device) and holding the HIPD 442. In the third AR system 400c, the wrist-wearable device 426, the MR device 432, and/or the HIPD 442 are used to interact within an MR environment, such as a VR game or other MR/VR application. While the MR device 432 presents a representation of a VR game (e.g., first MR game environment 420) to the user 402, the wrist-wearable device 426, the MR device 432, and/or the HIPD 442 detect and coordinate one or more user inputs to allow the user 402 to interact with the VR game.

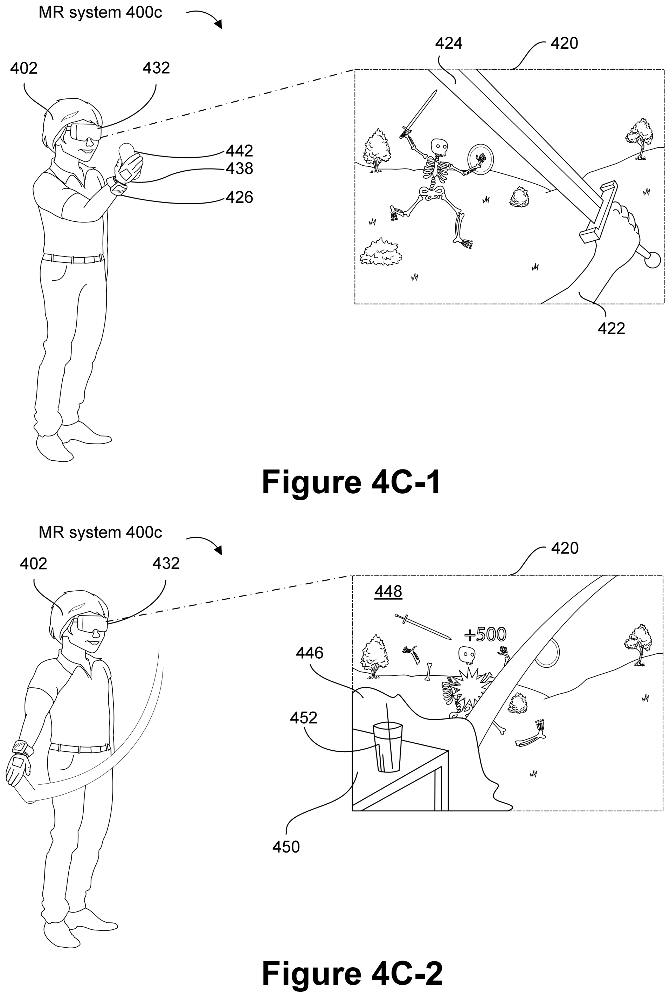

In some embodiments, the user 402 can provide a user input via the wrist-wearable device 426, the MR device 432, and/or the HIPD 442 that causes an action in a corresponding MR environment. For example, the user 402 in the third MR system 400c (shown in Figure 4C-1) raises the HIPD 442 to prepare for a swing in the first MR game environment 420. The MR device 432, responsive to the user 402 raising the HIPD 442, causes the MR representation of the user 422 to perform a similar action (e.g., raise a virtual object, such as a virtual sword 424). In some embodiments, each device uses respective sensor data and/or image data to detect the user input and provide an accurate representation of the user 402's motion. For example, image sensors (e.g., SLAM cameras or other cameras) of the HIPD 442 can be used to detect a position of the HIPD 442 relative to the user 402's body such that the virtual object can be positioned appropriately within the first MR game environment 420; sensor data from the wrist-wearable device 426 can be used to detect a velocity at which the user 402 raises the HIPD 442 such that the MR representation of the user 422 and the virtual sword 424 are synchronized with the user 402's movements; and image sensors of the MR device 432 can be used to represent the user 402's body, boundary conditions, or real-world objects within the first MR game environment 420.

In Figure 4C-2, the user 402 performs a downward swing while holding the HIPD 442. The user 402's downward swing is detected by the wrist-wearable device 426, the MR device 432, and/or the HIPD 442 and a corresponding action is performed in the first MR game environment 420. In some embodiments, the data captured by each device is used to improve the user's experience within the MR environment. For example, sensor data of the wrist-wearable device 426 can be used to determine a speed and/or force at which the downward swing is performed and image sensors of the HIPD 442 and/or the MR device 432 can be used to determine a location of the swing and how it should be represented in the first MR game environment 420, which, in turn, can be used as inputs for the MR environment (e.g., game mechanics, which can use detected speed, force, locations, and/or aspects of the user 402's actions to classify a user's inputs (e.g., user performs a light strike, hard strike, critical strike, glancing strike, miss) or calculate an output (e.g., amount of damage)).

Figure 4C-2 further illustrates that a portion of the physical environment is reconstructed and displayed at a display of the MR device 432 while the MR game environment 420 is being displayed. In this instance, a reconstruction of the physical environment 446 is displayed in place of a portion of the MR game environment 420 when object(s) in the physical environment are potentially in the path of the user (e.g., a collision with the user and an object in the physical environment are likely). Thus, this example MR game environment 420 includes (i) an immersive VR portion 448 (e.g., an environment that does not have a corollary counterpart in a nearby physical environment) and (ii) a reconstruction of the physical environment 446 (e.g., table 450 and cup 452). While the example shown here is an MR environment that shows a reconstruction of the physical environment to avoid collisions, other uses of reconstructions of the physical environment can be used, such as defining features of the virtual environment based on the surrounding physical environment (e.g., a virtual column can be placed based on an object in the surrounding physical environment (e.g., a tree)).

While the wrist-wearable device 426, the MR device 432, and/or the HIPD 442 are described as detecting user inputs, in some embodiments, user inputs are detected at a single device (with the single device being responsible for distributing signals to the other devices for performing the user input). For example, the HIPD 442 can operate an application for generating the first MR game environment 420 and provide the MR device 432 with corresponding data for causing the presentation of the first MR game environment 420, as well as detect the user 402's movements (while holding the HIPD 442) to cause the performance of corresponding actions within the first MR game environment 420. Additionally or alternatively, in some embodiments, operational data (e.g., sensor data, image data, application data, device data, and/or other data) of one or more devices is provided to a single device (e.g., the HIPD 442) to process the operational data and cause respective devices to perform an action associated with processed operational data.

In some embodiments, the user 402 can wear a wrist-wearable device 426, wear an MR device 432, wear smart textile-based garments 438 (e.g., wearable haptic gloves), and/or hold an HIPD 442 device. In this embodiment, the wrist-wearable device 426, the MR device 432, and/or the smart textile-based garments 438 are used to interact within an MR environment (e.g., any AR or MR system described above in reference to Figures 4A-4B). While the MR device 432 presents a representation of an MR game (e.g., second MR game environment 420) to the user 402, the wrist-wearable device 426, the MR device 432, and/or the smart textile-based garments 438 detect and coordinate one or more user inputs to allow the user 402 to interact with the MR environment.

In some embodiments, the user 402 can provide a user input via the wrist-wearable device 426, an HIPD 442, the MR device 432, and/or the smart textile-based garments 438 that causes an action in a corresponding MR environment. In some embodiments, each device uses respective sensor data and/or image data to detect the user input and provide an accurate representation of the user 402's motion. While four different input devices are shown (e.g., a wrist-wearable device 426, an MR device 432, an HIPD 442, and a smart textile-based garment 438) each one of these input devices entirely on its own can provide inputs for fully interacting with the MR environment. For example, the wrist-wearable device can provide sufficient inputs on its own for interacting with the MR environment. In some embodiments, if multiple input devices are used (e.g., a wrist-wearable device and the smart textile-based garment 438) sensor fusion can be utilized to ensure inputs are correct. While multiple input devices are described, it is understood that other input devices can be used in conjunction or on their own instead, such as but not limited to external motion-tracking cameras, other wearable devices fitted to different parts of a user, apparatuses that allow for a user to experience walking in an MR environment while remaining substantially stationary in the physical environment, etc.

As described above, the data captured by each device is used to improve the user's experience within the MR environment. Although not shown, the smart textile-based garments 438 can be used in conjunction with an MR device and/or an HIPD 442.

While some experiences are described as occurring on an AR device and other experiences are described as occurring on an MR device, one skilled in the art would appreciate that experiences can be ported over from an MR device to an AR device, and vice versa.

Some definitions of devices and components that can be included in some or all of the example devices discussed are defined here for ease of reference. A skilled artisan will appreciate that certain types of the components described may be more suitable for a particular set of devices, and less suitable for a distinct set of devices. But subsequent reference to the components defined here should be considered to be encompassed by the definitions provided.

In some embodiments example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

The foregoing descriptions of Figures 4A to 4C-2 provided above are intended to augment the description provided in reference to Figures 1A to 3. While terms in the following description may not be identical to terms used in the foregoing description, a person having ordinary skill in the art would understand these terms to have the same meaning.

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in or opt out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

## Claims

1. A wearable device comprising:
a neuromuscular sensor configured to detect a neuromuscular signal indicative of muscular contraction within a hand; and
a processor configured to:
receive the neuromuscular signal from the neuromuscular sensor;
determine based on the neuromuscular signal that one or more fingers of the hand are performing one or more isometric contractions;
determine that the one or more isometric contractions are associated with a particular input at an XR device configured to perform a particular operation in response to the particular input; and
responsive to determining that the one or more isometric contractions are associated with the particular input, transmit an indication of the particular input to the XR device.

2. The wearable device of claim 1, wherein:
the processor is further configured to:
determine based on the neuromuscular signal whether first, second, or third fingers of the one or more fingers are isometrically contracting, wherein the first finger is associated with a first input, the second finger is associated with a second input, and the third finger is associated with a third input;
responsive to determining that (i) the first finger is isometrically contracting, transmit an indication of the first input to the XR device, (ii) the second finger is isometrically contracting, transmit an indication of the second input to the XR device, and (iii) the third finger is isometrically contracting, transmit an indication of the third input to the XR device; and
wherein the XR device is further configured to perform a first operation in response to the first input, a second operation in response to the second input, and a third operation in response to the third input; and optionally
the processor is further configured to, responsive to determining that the first finger is isometrically contracting, determine based on the neuromuscular signal a direction in which the first finger is isometrically contracting;
transmitting the indication of the first input comprises transmitting an indication of the direction in which the first finger is isometrically contracting; and
the XR device is further configured to perform the first operation based on the indication of the direction in which the first finger is isometrically contracting; and/or
the processor is further configured to, responsive to determining that the first finger is isometrically contracting, determine based on the neuromuscular signal an intensity at which the first finger is isometrically contracting;
transmitting the indication of the first input comprises transmitting an indication of the intensity at which the first finger is isometrically contracting; and
the XR device is further configured to perform the first operation based on the indication of the intensity at which the first finger is isometrically contracting.

3. The wearable device of claim 1, wherein:
the processor is further configured to transmit the indication of the particular input to the XR device prior to the particular input being received at the XR device via an input pad connected to the XR device; and
the particular operation comprises performing a latency-reduction operation preparatory to receiving the particular input from the input device such that the XR device is able to more quickly respond to receiving the particular input.

4. The wearable device of claim 1, wherein:
the particular input is an application-specific input;
the processor is further configured to determine that a particular application is active on the XR device; and
determining that the one or more isometric contractions are associated with the particular input at the XR device is based on the particular application.

5. The wearable device of claim 1, further comprising:
a surface sensor configured to detect a surface signal indicative of a surface proximity;
wherein the processor is further configured to, prior to determining that the one or more fingers are performing one or more isometric contractions, (i) receive the surface signal from the surface sensor, (ii) determine based on the surface signal that the hand is coming into contact with a surface, and (iii) responsive to determining that the hand is coming into contact with the surface, provide a notification regarding neuromuscular inputs or instruct the XR device to provide the notification regarding neuromuscular inputs.

6. The wearable device of claim 1, wherein:
the processor is further configured to (i) determine based on the neuromuscular signal whether first and second fingers are isometrically contracting and (ii) responsive to detecting that the first and second fingers are contracting, determine based on the neuromuscular signal a separation distance between the first and second fingers; and
determining that the one or more isometric contractions are associated with the particular input is based on the separation distance between the first and second fingers.

7. The wearable device of claim 1, wherein:
the neuromuscular sensor comprises a first EMG sensor configured to detect a first set of the one or more fingers and a second EMG sensor configured to detect a second set of the one or more fingers distinct from the first set of the one or more fingers; and
the neuromuscular signal comprises EMG data corresponding to the first and second sets of the one or more fingers.

8. The wearable device of claim 1, wherein the processor is further configured to:
after receiving the neuromuscular signal at a particular time, receive another neuromuscular signal at a subsequent time;
determine based on the other neuromuscular signal that the one or more fingers of the hand are performing one or more other isometric contractions;
determine that the one or more other isometric contractions are associated with another particular input at the XR device, wherein the XR device is further configured to perform another particular operation in response to the other particular input; and
responsive to determining that the one or more other isometric contractions are associated with the other particular input, transmit an indication of the other particular input to the XR device.

9. A non-transitory, computer-readable medium comprising instructions which, when executed by a processor of a wearable device, cause the processor to:
receive a neuromuscular signal from a neuromuscular sensor configured to detect the neuromuscular signal, wherein the neuromuscular signal is indicative of a muscular contraction within a hand;
determine based on the neuromuscular signal that one or more fingers of the hand are performing one or more isometric contractions;
determine that the one or more isometric contractions are associated with a particular input at an XR device configured to perform a particular operation in response to the particular input; and
responsive to determining that the one or more isometric contractions are associated with the particular input, transmit an indication of the particular input to the XR device.

10. The non-transitory, computer-readable medium of claim 9, wherein:
the instructions further cause the processor to:
determine based on the neuromuscular signal whether first, second, or third fingers of the one or more fingers are isometrically contracting, wherein the first finger is associated with a first input, the second finger is associated with a second input, and the third finger is associated with a third input;
responsive to determining that (i) the first finger is isometrically contracting, transmit an indication of the first input to the XR device, (ii) the second finger is isometrically contracting, transmit an indication of the second input to the XR device, and (iii) the third finger is isometrically contracting, transmit an indication of the third input to the XR device; and
wherein the XR device is further configured to perform a first operation in response to the first input, a second operation in response to the second input, and a third operation in response to the third input; and optionally
the instructions further cause the processor to, responsive to determining that the first finger is isometrically contracting, determine based on the neuromuscular signal a direction in which the first finger is isometrically contracting;
transmitting the indication of the first input comprises transmitting an indication of the direction in which the first finger is isometrically contracting; and
the XR device is further configured to perform the first operation based on the indication of the direction in which the first finger is isometrically contracting; and.or
the instructions further cause the processor to, responsive to determining that the first finger is isometrically contracting, determine based on the neuromuscular signal an intensity at which the first finger is isometrically contracting;
transmitting the indication of the first input comprises transmitting an indication of the intensity at which the first finger is isometrically contracting; and
the XR device is further configured to perform the first operation based on the indication of the intensity at which the first finger is isometrically contracting.

11. The non-transitory, computer-readable medium of claim 9, wherein:
the instructions further cause the processor to transmit the indication of the particular input to the XR device prior to the particular input being received at the XR device via an input pad connected to the XR device;
the particular operation comprises performing a latency-reduction operation preparatory to receiving the particular input from the input device such that the XR device is able to more quickly respond to receiving the particular input.

12. The non-transitory, computer-readable medium of claim 9, wherein:
the particular input is an application-specific input;
the instructions further cause the processor to determine that a particular application is active on the XR device; and
determining that the one or more isometric contractions are associated with the particular input at the XR device is based on the particular application.

13. The non-transitory, computer-readable medium of claim 9, wherein:
a surface sensor configured to detect a surface signal indicative of a surface;
the instructions further cause the processor to, prior to determining that the one or more fingers are performing one or more isometric contractions, (i) receive a surface signal from a surface sensor configured to detect the surface signal, wherein the surface signal is indicative of a surface proximity, (ii) determine based on the surface signal that the hand is coming into contact with a surface, and (iii) responsive to determining that the hand is coming into contact with the surface, provide a notification regarding neuromuscular inputs or instruct the XR device to provide the notification regarding neuromuscular inputs.

14. The non-transitory, computer-readable medium of claim 9, wherein:
the instructions further cause the processor to (i) determine based on the neuromuscular signal whether first and second fingers are isometrically contracting and (ii) responsive to detecting that the first and second fingers are contracting, determine based on the neuromuscular signal a separation distance between the first and second fingers; and
determining that the one or more isometric contractions are associated with the particular input is based on the separation distance between the first and second fingers.

15. A method for enabling surface-based inputs in XR systems, comprising:
receiving a neuromuscular signal from a neuromuscular sensor configured to detect the neuromuscular signal, wherein the neuromuscular signal is indicative of a muscular contraction within a hand;
determining based on the neuromuscular signal that one or more fingers of the hand are performing one or more isometric contractions;
determining that the one or more isometric contractions are associated with a particular input at an XR device configured to perform a particular operation in response to the particular input; and
responsive to determining that the one or more isometric contractions are associated with the particular input, transmitting an indication of the particular input to the XR device.
